# EUROPÄISCHE PATENTSCHRIFT

(11) **EP 1 580 158 B1**
(45) Veröffentlichungstag und Bekanntmachung des Hinweises auf die Patenterteilung: **21.01.2015**
(21) Anmeldenummer: 05006241.3
(22) Anmeldetag: 22.03.2005
(51) Int. Cl.: B66C 1/02, B65H 3/08

(54) **Sauggreifer**
Suction gripper
Bras de succion

(30) Priorität: 22.03.2004 DE 102004014635
(43) Veröffentlichungstag der Anmeldung: 28.09.2005
(73) Patentinhaber: J. Schmalz GmbH, 72293 Glatten (DE)
(72) Erfinder: Schmalz, Kurt, Dr., 72280 Dornstetten (DE); Eisele, Thomas, 78737 Fluorn-Winzeln (DE)
(74) Vertreter: DREISS Patentanwälte PartG mbB

(56) Entgegenhaltungen:
- EP-A- 0 368 166
- DE-A1- 3 516 941
- DE-A1- 4 002 324
- US-A- 3 724 687
- US-A- 4 589 648
- US-A- 4 979 729

## Beschreibung

Die Erfindung betrifft einen Sauggreifer mit einem Grundkörper und einer am Grundkörper befestigten umlaufenden Dichtlippe, die vom Grundkörper mit ihrer Dichtkante abragt und einen Saugraum umschließt, wobei innerhalb dieses Saugraumes ein Druckkissen am Grundkörper befestigt ist

Sauggreifer werden dazu benötigt, um Gegenstände anzusaugen, anzuheben und an einen anderen Ort verbringen zu können. Hierfür weist der Sauggreifer eine Dichtlippe auf, die an der Oberfläche des Werkstücks anliegt und zwischen dem Sauggreifer und der Oberfläche des Werkstücks einen Saugraum umschließt, welcher evakuiert werden kann. Dadurch legt sich der Sauggreifer dicht an die Oberfläche des Werkstücks an und hält dieses pneumatisch fest. Insbesondere bei der Handhabung von Blechen, zum Beispiel in der Automobilindustrie, haben sich derartige Sauggreifer bewährt. Da aber die Bleche oftmals eine geölte Oberfläche aufweisen besteht mitunter die Gefahr, dass beim Ansaugen und Abheben des obersten Bleches eines Blechstapels nicht nur dieses Blech abgehoben wird, sondern dass an diesem Blech aufgrund von Adhäsionskräften ein oder mehrere weitere Bleche anhaften und mit abgehoben werden. Diese Adhäsionskräfte stammen von den aneinander anliegenden, geölten Oberflächen der Bleche.

Aus der US-A-3,724,687 ist ein Aufnahmekopf für Platten bekannt, mit dem Plattenstapel vereinzelt werden können. Der Aufnahmekopf besitzt ein ringförmiges Stützelement, welches ein ausbeulen der Platte verhindert. Auch die US-A-4,589,648 und die US-A-4,979,729 zeigen Sauggreifer zum Ergreifen und Anheben von bogenförmigem Material.

Der Erfindung liegt die Aufgabe zugrunde, einen Sauggreifer bereitzustellen, mit dem sichergestellt werden kann, dass bei einem Blechstapel lediglich das oberste Blech abgehoben wird.

Diese Aufgabe wird mit einem Sauggreifer gelöst, der die Merkmale des Anspruchs 1 aufweist.

Wird ein derartiger Sauggreifer auf die Oberseite eines Bleches aufgesetzt, dann kommt die Dichtkante der Dichtlippe mit der Oberseite des Bleches in Berührung und der Saugraum ist geschlossen. Dieser Saugraum kann nun mit einem Unterdruck beaufschlagt werden. An der Oberseite des Bleches liegt jedoch nicht nur die Dichtkante der Dichtlippe an, sondern an der Oberseite liegt auch das im Saugraum befindliche Druckkissen an. Dieses Druckkissen verhindert nun, dass beim Evakuieren des Saugraumes das Blech in den Saugraum eingewölbt wird. Vielmehr verformt sich die Dichtlippe derart, dass sie zurückweicht, so dass lediglich noch das Druckkissen vom Grundkörper abragt. Das Blech wird also nicht mehr konkav in den Saugraum eingesaugt, sondern nimmt eine konvexe Form an, indem das Druckkissen das Blech vom Saugraum wegdrückt, wobei der Bereich außerhalb des Druckkissens über die Dichtlippe angesaugt wird. Das Druckkissen ragt also weiter vom Grundkörper ab, als die Dichtlippe. Befindet sich ein derartiger Sauggreifer im Randbereich des Bleches, wird durch diese Verformung des Bleches der Randbereich des obersten Bleches vom darunter liegenden Blech abgehoben, so dass der zwischen den Blechen sich befindende Ölfilm aufgerissen wird, Luft einströmen kann und dadurch die Adhäsionskräfte abgebaut werden. Hierdurch wird sichergestellt, dass lediglich das oberste Blech eines Blechstapels angesaugt und abgehoben wird.

Dieses verformbare Druckkissen kann mit einem kompressiblen Medium, zum Beispiel Gas, angefüllt sein, es kann jedoch auch mit einem inkompressiblen Medium, zum Beispiel einer Flüssigkeit oder einem Gel, angefüllt sein. Ein derartiges Druckkissen kann beim Aufsetzen des Sauggreifers auf das anzusaugende Werkstück so lange verformt werden, bis die Dichtkante der Dichtlippe an der Oberseite des Werkstücks anliegt und der Saugraum geschlossen ist. Beim Evakuieren des Saugraumes kann dann das Druckkissen, falls dieses mit einem kompressiblen Medium angefüllt ist, sich aufgrund des umgebenden Unterdruckes ausdehnen und eine Kraft auf das anzusaugende Werkstück ausüben.

Bei einer Weiterbildung ist vorgesehen, dass das Druckkissen aufblasbar oder auffüllbar ist. Bei dieser Variante kann das Druckkissen entweder mit einem kompressiblen oder mit einem inkompressiblen Fluid angefüllt werden, so dass die Verformung des Druckkissens gezielt gesteuert werden kann. So kann zum Beispiel die Verformung lediglich in der Abhebephase stattfinden oder es werden lediglich die Druckkissen der Sauggreifer angesteuert, die sich im Randbereich eines Bleches befinden.

Bei einer Weiterbildung ist vorgesehen, dass das Druckkissen von einer an der dem Saugraum zugewandten Außenseite des Grundkörpers befestigten Membran gebildet wird. Eine derartige Membran ist einfach herzustellen und problemlos an der Außenseite des Grundkörpers befestigbar. Bei einer anderen Ausführungsform wird das Druckkissen von einem Faltenbalg gebildet. Dieser Faltenbalg hat den Vorteil, dass er stark expandierbar beziehungsweise komprimierbar ist, und dass der Angriffspunkt beziehungsweise die Fläche, an welcher das Druckkissen am Werkstück angreift, exakt bestimmt werden kann.

Um das Druckkissen mit einem Medium zu versorgen, weist der Grundkörper erfindungsgemäß einen in das Druckkissen mündenden Kanal auf. Über diesen Kanal kann ein Fluid, das heißt ein Gas oder eine Flüssigkeit, zu- beziehungsweise abgeführt werden.

Mit Vorzug besteht das Druckkissen aus einem elastischen Material, insbesondere aus Kunststoff, und vorzugsweise aus Gummi. Es ist jedoch auch denkbar, dass zum Beispiel ein Faltenbalg verwendet wird, der aus Metall besteht.

Weitere vorteile, Merkmale und Einzelheiten der Erfindung ergeben sich aus den Ansprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:

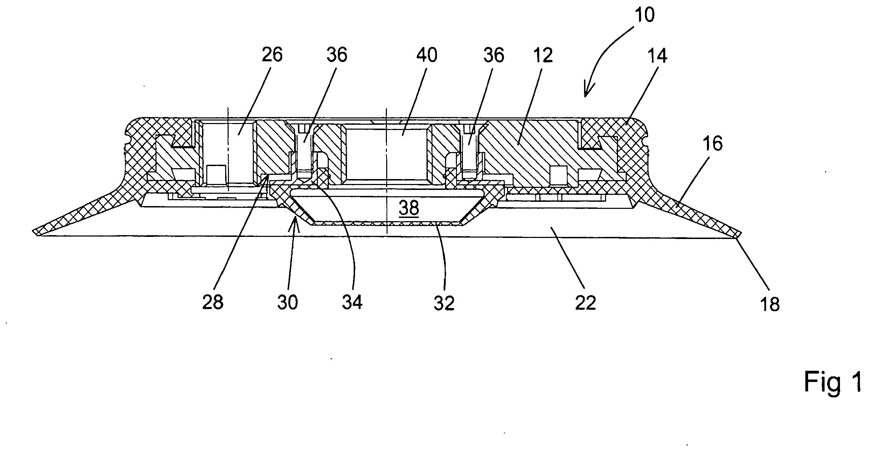

Figur 1 einen Längsschnitt durch einen Sauggreifer; und
Figur 2 den Sauggreifer gemäß Figur 1 mit einem daran angesaugten Werkstück.

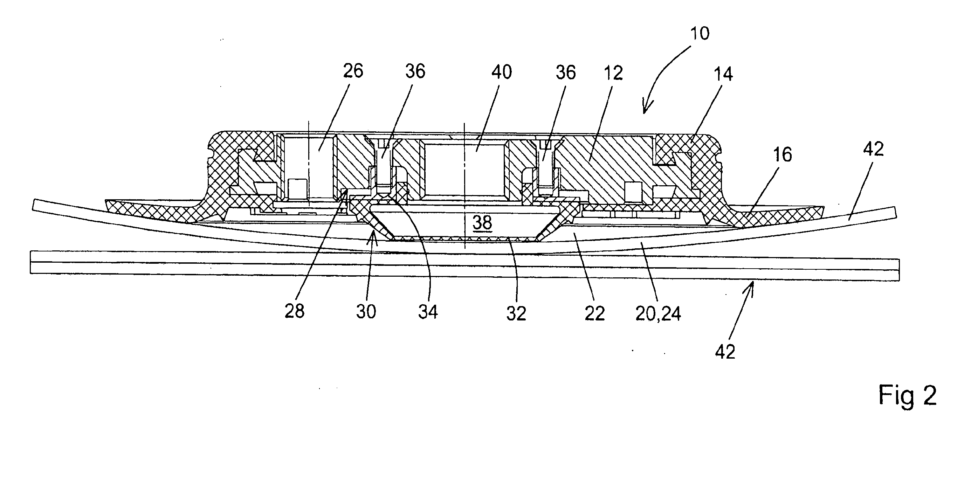

In der Zeichnung ist ein insgesamt mit 10 bezeichneter Sauggreifer dargestellt, der einen Grundkörper 12, zum Beispiel aus Aluminium, und ein daran befestigtes Dichtelement 14 aus Kunststoff, insbesondere aus einem Elastomer aufweist. Dieses Dichtelement 14 ist auswechselbar am Grundkörper 12 befestigt, insbesondere aufgeklipst. Das Dichtelement 14 weist eine Dichtlippe 16 mit einer Dichtkante 18 auf, über welche bei Anlage an ein Werkstück 20 ein Saugraum 22 abgeschlossen wird. Liegt, wie in der Figur 2 dargestellt, ein Werkstück 20, insbesondere ein Blech 24, am Saugreifer 10 an, dann ist der Saugraum 22 zur Umgebung hin abgedichtet. Er kann über einen Kanal 26 evakuiert werden.

An der dem Werkstück 20 zugewandten Außenseite 28 des Grundkörpers 12 ist ein insgesamt mit 30 bezeichnetes Druckkissen befestigt, an welchem das Werkstück 20 anliegt. Das Druckkissen 30 wird von einer Membran 32 gebildet, die insbesondere aus Gummi bestehen. Die Membran 32 ist an einen Halter 34 anvulkanisiert, der mittels Schrauben 36 am Grundkörper 12 fixiert ist, und umschließt einen Hohlraum 38, der über einen Kanal 40 zugänglich ist. Über diesen Kanal 40 kann der Hohlraum 38 mit Druckluft oder einem anderen Medium beaufschlagt werden, so dass sich die Membran 32 nach außen, dass heißt in Richtung des werkstücks 20 auswölbt. Es besteht jedoch auch die Möglichkeit, dass der Kanal 40 verschlossen wird, so dass der Hohlraum 38 abgeschlossen ist. Dabei kann der Hohlraum 38 mit einem komprimierbaren oder einem inkompressiblen Medium, Luft oder ein Gel, angefüllt sein.

Wird der Sauggreifer 10, wie in der Figur 2 dargestellt, auf ein Werkstück 20 aufgesetzt und der Saugraum 22 evakuiert, dann legen sich die Dichtlippen 16 flächig an der Oberseite des Werkstücks 20, wobei der zwischen den Dichtlippen 18 sich befindende Bereich des Werkstücks vom Druckkissen 30 abgestützt wird. Mit zunehmendem Evakuieren des Saugraumes 22 werden die Dichtlippen 16 nach oben gebogen und nehmen das Blech 24 in diesem Bereich mit.

Befindet sich der Saugreifer 10 in der Nähe eines Randes 42 des Bleches 24, dann wird dieser Rand 42 nach oben gebogen und das oberste Blech eines Blechstapels 44 abgehoben. Dabei kann das Druckkissen 30 durch Zugabe von Druckluft über den Kanal 40 zusätzlich aufgeblasen werden, wodurch die Unterstützungswirkung im mittleren Bereich noch vergrößert wird. Hierdurch wird sichergestellt, dass das oberste Blech 24 vom Stapel 44 quasi abgeschälz wird, so dass lediglich dieses oberste Blech 24 und keine der darunter liegenden Bleche mit abgehoben werden. Durch gezielte Ansteuerung können z.B. lediglich die im Bereich eines Randes 42 sich befindende Saugreifer 10 mit Druckluft versorgt werden, so dass lediglich dort das Druckkissen 30 aktiviert wird und lediglich in diesem Bereich das Blech 24, wie dargestellt, verformt wird, um die Ränder 42 abzuheben.

Mit einem derartigen Saugreifer 10 können Bleche 24 von einem Stapel 44 mit Sicherheit einzeln abgehoben werden.

## Patentansprüche

1. Sauggreifer (10) mit einem Grundkörper (12) und einer am Grundkörper (12) befestigten umlaufenden Dichtlippe (16), die vom Grundkörper (12) mit ihrer Dichtkante (18) abragt und einen Saugraum (22) umschließt, wobei innerhalb dieses Saugraumes (22) ein Druckkissen (30) am Grundkörper (12) befestigt ist, wobei das Druckkissen (30) hohl und verformbar ist, **dadurch gekennzeichnet, dass** das Druckkissen (30) einen Hohlraum (38) umschließt und der Hohlraum (38) über einen Kanal (40) zugänglich ist und mit einem komprimierbaren oder einem inkompressiblen Medium, Luft oder ein Gel, anfüllbar ist.

2. Sauggreifer nach einem der vorhergehenden Ansprüche, **dadurch gekennzeichnet, dass** das Druckkissen (30) mit einem Fluid gefüllt ist.

3. Sauggreifer nach einem der vorhergehenden Ansprüche, **dadurch gekennzeichnet, dass** das Druckkissen (30) aufblasbar oder auffüllbar ist.

4. Sauggreifer nach einem der vorhergehenden Ansprüche, **dadurch gekennzeichnet, dass** das Druckkissen (30) auf unterschiedliche Größen aufblasbar oder auffüllbar ist.

5. Sauggreifer nach einem der vorhergehenden Ansprüche, **dadurch gekennzeichnet, dass** das Druckkissen (30) von einer an der dem Saugraum (22) zugewandten Außenseite (28) des Grundkörpers (12) befestigten Membran (32) gebildet wird.

6. Sauggreifer nach einem der Ansprüche 1 bis 4, **dadurch gekennzeichnet, dass** das Druckkissen (30) ein Faltenbalg ist.

7. Sauggreifer nach einem der vorhergehenden Ansprüche, **dadurch gekennzeichnet, dass** das Druckkissen (30) aus einem elastischen Material, insbesondere aus Kunststoff, vorzugsweise aus Gummi, besteht.

## Claims

1. Suction gripper (10) having a base body (12) and a peripheral sealing lip (16) fastened to the base body (12), said sealing lip projecting with its sealing edge (18) from the base body (12) and enclosing a suction chamber (22), wherein a pressure cushion (30) is fastened to the base body (12) within this suction chamber (22), wherein the pressure cushion (30) is hollow and deformable, **characterised in that** the pressure cushion (30) encloses a hollow chamber (38) and the hollow chamber (38) is accessible by means of a channel (40) and can be filled with a compressible or incompressible medium, air or a gel.

2. Suction gripper according to one of the preceding claims, **characterised in that** the pressure cushion (30) is filled with a fluid.

3. Suction gripper according to one of the preceding claims, **characterised in that** the pressure cushion (30) is inflatable or fillable.

4. Suction gripper according to one of the preceding claims, **characterised in that** the pressure cushion (30) is inflatable or fillable to different sizes.

5. Suction gripper according to one of the preceding claims, **characterised in that** the pressure cushion (30) is formed by a membrane (32) fastened to the outside (28) of the base body (12) facing toward the suction chamber (22).

6. Suction gripper according to one of the claims 1 to 4, **characterised in that** the pressure cushion (30) is a bellows.

7. Suction gripper according to one of the preceding claims, **characterised in that** the pressure cushion (30) consists of an elastic material, in particular plastics, preferably rubber.

## Revendications

1. Bras de succion (10) ayant un corps de base (12) et une lèvre d'étanchéité périphérique (16) fixée sur le corps de base (12), qui fait saillie par rapport au corps de base (12) avec son arête d'étanchéité (18) et comprend un espace de succion (22), étant entendu qu'à l'intérieur de cet espace de succion (22), un coussin de pression (30) est fixé sur le corps de base (12), étant entendu que le coussin de pression (30) est creux et déformable, **caractérisé en ce que** le coussin de pression (30) comprend un espace creux (38) et **en ce que** l'espace creux (38) est accessible par le biais d'une conduite (40) et peut être rempli avec une substance compressible ou incompressible, de l'air ou un gel.

2. Bras de succion selon la revendication précédente, **caractérisé en ce que** le coussin de pression (30) est rempli avec un fluide.

3. Bras de succion selon l'une des revendications précédentes, **caractérisé en ce que** le coussin de pression (30) peut être gonflé ou chargé.

4. Bras de succion selon l'une des revendications précédentes, **caractérisé en ce que** le coussin de pression (30) peut être gonflé ou chargé jusqu'à différentes dimensions.

5. Bras de succion selon l'une des revendications précédentes, **caractérisé en ce que** le coussin de pression (30) est formé par une membrane (32) fixée sur le côté extérieur (28) du corps de base (12) dirigé vers l'espace de succion (22).

6. Bras de succion selon l'une des revendications 1 à 4, **caractérisé en ce que** le coussin de pression (30) est un soufflet.

7. Bras de succion selon l'une des revendications précédentes, **caractérisé en ce que** le coussin de pression (30) est constitué d'un matériau élastique, en particulier d'un matériau plastique, et de préférence de caoutchouc.
